# EUROPÄISCHE PATENTANMELDUNG

(11) **EP 3 736 928 A1**
(43) Veröffentlichungstag der Anmeldung: **11.11.2020**
(21) Anmeldenummer: 19173303.9
(22) Anmeldetag: 08.05.2019
(51) Int. Cl.: H02G 3/04, H02G 3/22

(54) **KABELBOX FÜR EINE TROCKENBAUWAND**

(71) Anmelder: Hilti Aktiengesellschaft, 9494 Schaan (LI)
(72) Erfinder: Förg, Christian, 86807 Buchloe (DE)
(74) Vertreter: Hilti Aktiengesellschaft Corporate Intellectual Property

(57) **Zusammenfassung**

Es wird eine Kabelbox (30) zur Anordnung an einer Wand oder einer Decke und zur Verbindung mit einer Trockenbauwand, wobei in montiertem Zustand der Kabelbox (30) Leitungen durch die Kabelbox (30) und somit durch die Trockenbauwand führbar sind. Die Kabelbox (30) umfasst eine erste Einrichtung (2) mit wenigstens einem Befestigungselement (5) zur Anordnung der ersten Einrichtung (2) an einer Wand oder einer Decke und eine zweite Einrichtung (31), wobei die erste Einrichtung (2) und die zweite Einrichtung (31) in miteinander verbundener, montierter Position eine Durchführung von Leitungen in einer Längsrichtung durch die Kabelbox (30) ermöglichen. Die erste Einrichtung (2) weist wenigstens ein Dichtelement (8) zur Abdichtung gegenüber einer Wand oder einer Decke in an der Wand oder an der Decke montierter Position der Kabelbox (30) auf.

## Beschreibung

### Kabelbox für eine Trockenbauwand

Die vorliegende Erfindung betrifft eine Kabelbox zur Anordnung an einer Wand oder einer Decke und zur Verbindung mit einer Trockenbauwand gemäß dem Oberbegriff des Patentanspruches 1.

Um eine Leitungsdurchführung durch eine Trockenbauwand bereit zu stellen ist es bekannt, eine Kabelbox bereit zu stellen, die beispielsweise an einer Decke festlegbar ist. Nach einer Festlegung der Kabelbox an der Decke ist die Kabelbox gegenüber der Decke in einem separaten Arbeitsschritt abzudichten.

Eine Installation einer derartigen Kabelbox an einer Wand oder einer Decke erfordert nachteilhafterweise viele Arbeitsschritte und ist daher zeitaufwändig.

Es ist Aufgabe der vorliegenden Erfindung, eine Kabelbox bereitzustellen, die eine Montage und Abdichtung gegenüber einer Wand oder Decke vereinfacht.

Die Aufgabe wird mit einer Kabelbox gemäß des Patentanspruches 1 gelöst.

Es ist somit eine Kabelbox zur Anordnung an einer Wand oder einer Decke und zur Verbindung mit einer Trockenbauwand, wobei in montiertem Zustand der Kabelbox Leitungen durch die Kabelbox und somit durch die Trockenbauwand führbar sind, vorgesehen, wobei die Kabelbox eine erste Einrichtung mit wenigstens einem Befestigungselement zur Anordnung der ersten Einrichtung an einer Wand oder einer Decke und eine zweite Einrichtung umfasst, wobei die erste Einrichtung und die zweite Einrichtung in miteinander verbundener, montierter Position eine Durchführung von Leitungen in einer Längsrichtung durch die Kabelbox ermöglichen. Erfindungsgemäß ist vorgesehen, dass die erste Einrichtung wenigstens ein Dichtelement zur Abdichtung gegenüber einer Wand oder einer Decke in an der Wand oder an der Decke montierter Position der Kabelbox aufweist

Dadurch, dass die Kabelbox bereits wenigstens mit einem Dichtelement ausgeführt ist, ist bei einer Montage kein separater Arbeitsschritt zur Abdichtung der ersten Einrichtung der Kabelbox gegenüber der Kabelbox erforderlich, so dass die Kabelbox einfach und schnell dichtend an einer Wand oder einer Decke bzw. einem Boden dichtend festlegbar ist.

Bei einer vorteilhaften Ausführung der Erfindung weist die erste Einrichtung und/oder die zweite Einrichtung wenigstens ein Trockenbauprofilelement zur Anbindung einer Trockenbauwand an die Kabelbox auf. Durch das Vorsehen des wenigstens einen Trockenbauprofilelements zur Anbindung einer Trockenbauwand an die Kabelbox ist eine Montage einer Trockenbauwand an die Kabelbox vereinfacht und schnell durchführbar. Eine separate Anbringung von Trockenbauprofilelementen an der Kabelbox bei einer Montage der Kabelbox ist hierdurch gegebenenfalls nicht erforderlich, so dass durch die erfindungsgemäße Kabelbox eine einfache und schnelle Anbindung einer Trockenbauwand an die Kabelbox ermöglicht ist.

Um eine Montage weiter zu verbessern, kann die erste Einrichtung und/oder die zweite Einrichtung in montierter Position der Kabelbox umlaufend Trockenbauprofilelemente zur Anbindung einer Trockenbauwand aufweisen.

Eine gute Abdichtung zwischen der ersten Einrichtung und der Wand oder Decke, an der die erste Einrichtung befestigt werden soll, zu erzielen, kann das wenigstens eine Dichtelement der ersten Einrichtung streifenförmig ausgeführt sein und sich wenigstens annähernd über eine gesamte Länge der ersten Einrichtung erstrecken. Dabei können beispielsweise ein einziges, insbesondere mittig angeordnetes Dichtelement oder zwei oder mehr versetzt und insbesondere im Wesentlichen parallel zueinander angeordnet Dichtelemente vorgesehen sein.

Um eine Montage der Kabelbox zu vereinfachen sind die erste Einrichtung und die zweite Einrichtung bei einer vorteilhaften Ausführung der Erfindung lösbar miteinander verbindbar. Eine Verbindung der ersten Einrichtung mit der zweiten Einrichtung kann beispielsweise über Schrauben, Bolzen, Haken oder dergleichen durchgeführt werden. Um eine flexible Montage hinsichtlich der Position der zweiten Einrichtung gegenüber der ersten Einrichtung zu ermöglichen und die zweite Einrichtung nach einer Anordnung der ersten Einrichtung an einer Wand oder Decke variieren zu können, ist die zweite Einrichtung insbesondere in verschiedenen Positionen an der ersten Einrichtung festlegbar, wobei eine derart flexible Anordnung auf konstruktiv einfache Weise über eine oder mehrere Langlochverbindungen umgesetzt sein kann.

Die erste Einrichtung und die zweite Einrichtung können mittels eines Scharniers miteinander verbunden sein. Hierdurch kann eine Handhabung der Kabelbox insbesondere bei einer Montage vereinfacht sein.

Bei einer konstruktiv einfachen Ausführung der Erfindung ist die erste Einrichtung im Wesentlichen plattenförmig und die zweite Einrichtung im Wesentlichen U-förmig ausgeführt. Alternativ hierzu kann es auch vorgesehen sein, dass die erste Einrichtung und die zweite Einrichtung im Querschnitt im Wesentlichen L-förmig und/oder winkelförmig ausgeführt sind.

Die erste Einrichtung und die zweite Einrichtung können bei einer schnell zu montierenden Ausführung einstückig bzw. einteilig bzw. integral miteinander ausgeführt sein.

Um auf einfache Weise eine Abdichtung eines zur Durchführung von Leitungen vorgesehenen Bereichs erzielen zu können, können die erste Einrichtung und/oder die zweite Einrichtung in wenigstens einem zur Durchführung von Leitungen vorgesehenen Bereich wenigstens eine Dichteinrichtung aufweisen.

Bei einer konstruktiv einfachen Ausführung der Erfindung weisen sowohl die erste Einrichtung als auch die zweite Einrichtung jeweils wenigstens eine Dichteinrichtung auf, wobei die Dichteinrichtungen in montiertem Zustand der Kabelbox einen zur Leitungsdurchführung vorgesehenen Kanal nach außen abdichten, wobei eine Leitung in montiertem Zustand zwischen der Dichteinrichtung der ersten Einrichtung und der Dichteinrichtung der zweiten Einrichtung angeordnet ist. Vorteilhaft weisen sowohl die erste Einrichtung als auch die zweite Einrichtung jeweils zwei Dichteinrichtungen auf, von denen eine Dichteinrichtung der ersten Einrichtung und eine Dichteinrichtung der zweiten Einrichtung in einem ersten Randbereich des zur Leitungsdurchführung vorgesehenen Kanals und eine Dichteinrichtung der ersten Einrichtung und eine Dichteinrichtung der zweiten Einrichtung in einem zweiten Randbereich des Kanals angeordnet sind.

Eine gute Abdichtung ist erzielbar, wenn wenigstens eine Dichteinrichtung, insbesondere alle Dichteinrichtungen, mit einem elastischen Schaumstoff ausgeführt ist bzw. sind und vorzugsweise mit einem intumeszierenden Material ausgeführt ist bzw. sind. Durch die Verwendung eines intumeszierenden Materials kann auf einfache Weise eine sichere Abdichtung in einem Brandfall sichergestellt werden.

Bei einer vorteilhaften Ausführung der Erfindung weist die erste Einrichtung und/oder die zweite Einrichtung insbesondere im Bereich eines zur Leitungsdurchführung vorgesehenen Kanals ein Intumeszenzelement, beispielsweise in Form eines Intumeszenzstreifens, auf. Hierdurch kann auf einfache Weise eine sichere Abdichtung in einem Brandfall sichergestellt werden.

Wenn die erste Einrichtung und/oder die zweite Einrichtung im Bereich des wenigstens einen Trockenbauprofilelementes eine weitere Dichteinrichtung aufweist, die auf einer in montierter Position der Kabelbox mit einem Trockenbauelement zusammenwirkenden Seite des wenigstens einen Trockenbauprofilelements angeordnet ist, können durch die weitere Dichteinrichtung in diesem Bereich auftretende Bewegungen ausgeglichen werden. Zudem kann beispielsweise in einem Brandfall die Weiterleitung von Feuer, Rauch und Temperatur an einer Außenseite der Kabelbox verhindert werden.

Bei einer konstruktiv einfachen Ausführung einer Kabelbox nach der Erfindung ist die erste Einrichtung und/oder die zweite Einrichtung mit einem Blech, insbesondere Stahlblech, ausgeführt.

Weitere Vorteile ergeben sich aus der folgenden Figurenbeschreibung. In den Figuren sind mehrere Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine dreidimensionale Ansicht einer ersten Ausführung einer Kabelbox mit einer ersten Einrichtung und einer zweiten Einrichtung;
- Fig. 2: eine dreidimensionale Ansicht einer Kabelbox mit einer alternativ ausgeführten zweiten Einrichtung;
- Fig. 3: eine dreidimensionale Ansicht einer alternativ ausgeführten ersten Einrichtung;
- Fig. 4: eine dreidimensionale Ansicht einer weiteren alternativen Ausführung der ersten Einrichtung;
- Fig. 5: eine dreidimensionale Ansicht der ersten Einrichtung gemäß Fig. 4 aus einer anderen Perspektive;
- Fig. 6: eine dreidimensionale Ansicht einer alternativen Ausführung der zweiten Einrichtung;
- Fig. 7: eine dreidimensionale Ansicht einer weiteren alternativen Ausführung der zweiten Einrichtung;
- Fig. 8: eine vereinfachte Seitenansicht einer alternativen Ausführung einer Kabelbox mit einer ersten Einrichtung und einer zweiten Einrichtung; und
- Fig. 9: eine vereinfachte Seitenansicht einer weiteren alternativen Ausführung einer Kabelbox mit einer ersten Einrichtung und einer zweiten Einrichtung.

### Ausführungsbeispiele:

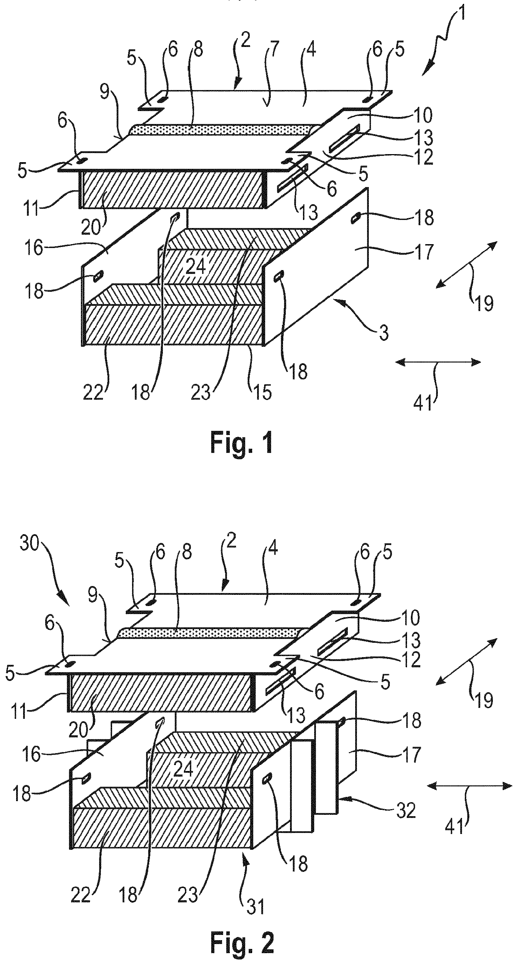

Fig. 1 zeigt eine Kabelbox 1 mit einer ersten, plattenförmig ausgeführten Einrichtung 2 und einer zweiten, im Wesentlichen U-förmig ausgeführten Einrichtung 3. Die erste Einrichtung 2 und die zweite Einrichtung 3 können sowohl einteilig als auch mehrteilig ausgeführt sein und sind insbesondere als Blechteil ausgeführt. Die erste Einrichtung 2 ist zur Anordnung an einer Wand oder Decke vorgesehen und weist hierzu, im Bereich einer hier im Wesentlichen rechteckig ausgeführten Grundplatte 4 in Eckbereichen jeweils eine überstehende Befestigungslasche 5 mit einer Bohrung 6 auf, wobei die erste Einrichtung 2 beispielsweise mittels durch die Bohrung 6 geführten Schrauben an der Wand oder Decke festlegbar ist.

Auf einer in montiertem Zustand der Wand oder Decke zugewandten Seite 7 der Grundplatte 4 ist ein hier streifenförmig und/oder wulstartig ausgeführtes Dichtelement 8 angeordnet, das sich vorliegend von einem ersten Seitenbereich 9 bis zu einem zweiten Seitenbereich 10 der ersten Einrichtung 2 erstreckt. Die erste Einrichtung 2 weist weiterhin ein erstes Seitenelement 11 und ein zweites Seitenelement 12 auf, wobei das erste Seitenelement 11 den ersten Seitenbereich 9 und das zweite Seitenelement 12 den zweiten Seitenbereich 10 bildet. Die Seitenelemente 11, 12 sind an gegenüberliegenden Seiten der Grundplatte 4 angeordnet und weisen vorliegend jeweils zwei Langlöcher 13 auf.

Die zweite u-förmige Einrichtung 3 weist eine Grundplatte 15 und zwei an gegenüberliegenden Enden der Grundplatte 15 angeordnete Seitenplatten 16, 17 auf, die jeweils in einem der Grundplatte 15 abgewandten Bereich zwei Löcher bzw. Bohrungen 18 aufweisen. Die Bohrungen 18 sind zur Befestigung der zweiten Einrichtung 3 an der ersten Einrichtung 2 vorgesehen, wobei durch das Vorsehen der Langlöcher 13 der ersten Einrichtung 2 nach einer Montage der ersten Einrichtung 2 an einer Wand oder einer Decke eine in Querrichtung 19 variable Montage der zweiten Einrichtung 3 an der ersten Einrichtung 2 ermöglicht ist. In miteinander verbundenem Zustand der ersten Einrichtung 2 mit der zweiten Einrichtung 3 wird von der Kabelbox 1 ein Kanal 18 gebildet, der sich zwischen den Seitenelementen 11, 12 der ersten Einrichtung 2 und den Seitenplatten 16, 17 der zweiten Einrichtung 3 insbesondere im Wesentlichen in Querrichtung 19 erstreckt.

Die erste Einrichtung 2 weist zwei Dichteinrichtungen 20, 21 auf, wobei eine erste Dichteinrichtung 20 in einem in Querrichtung 19 ersten Randbereich der ersten Einrichtung 2 und eine zweite Dichteinrichtung 21 in einem in Querrichtung 19 dem ersten Randbereich gegenüberliegenden zweiten Randbereich der ersten Einrichtung 2 angeordnet ist. Die Dichteinrichtungen 20, 21 sind vorliegend quaderförmig ausgeführt und erstrecken sich jeweils vom ersten Seitenbereich 9 bis zum zweiten Seitenbereich 10 und haben eine Erstreckung in einer der Grundplatte 4 abgewandten Richtung, die vorliegend derjenigen der Seitenelemente 11, 12 im Wesentlichen entspricht. Die Dichteinrichtungen 20, 21 sind flexibel beispielsweise mit einem elastischen Schaumstoff ausgeführt und können ein intumeszierendes Material aufweisen.

Ebenso weist die zweite Einrichtung 3 vorliegend zwei Dichteinrichtungen 22, 23, wobei eine dritte Dichteinrichtung 22 in einem in Querrichtung 19 ersten Randbereich der zweiten Einrichtung 3 und eine vierte Dichteinrichtung 23 in einem in Querrichtung 19 dem ersten Randbereich gegenüberliegenden zweiten Randbereich der zweiten Einrichtung 3 angeordnet ist. Die Dichteinrichtungen 22, 23 sind vorliegend vergleichbar zu den Dichteinrichtungen 20, 21 quaderförmig ausgeführt und erstrecken sich jeweils von der ersten Seitenplatte 16 bis zu der zweiten Seitenplatte 17 und haben eine Erstreckung in einer der Grundplatte 15 abgewandten Richtung, die vorliegend im Wesentlichen derjenigen der Dichteinrichtungen 20, 21 im Wesentlichen entspricht. Die Dichteinrichtungen 22, 23 sind ebenfalls flexibel beispielsweise mit einem elastischen Schaumstoff ausgeführt und können ein intumeszierendes Material aufweisen.

Die Dichteinrichtungen 20 bis 24 weisen in Querrichtung 19 jeweils eine derartige Erstreckung auf, dass in sämtlichen durch die Langlöcher 13 ermöglichten Montagepositionen der zweiten Einrichtung 3 an der ersten Einrichtung 2 eine gewünscht große Anlagefläche zwischen den jeweiligen Dichteinrichtungen 20 und 22 bzw. 21 und 23 vorliegt.

In verbundenem Zustand der ersten Einrichtung 2 mit der zweiten Einrichtung 3 liegen die erste Dichteinrichtung 20 und die dritte Dichteinrichtung 22 sowie die zweite Dichteinrichtung 21 und die vierte Dichteinrichtung 23 dichtend aneinander an. Auch bei einer oder mehrerer durch den Kanal 18 geführten Leitungen dichten einander zugewandte Dichteinrichtungen 20 und 22 bzw. 21 und 23 den Kanal 18 sicher ab.

Die Kabelbox 30 gemäß Fig. 2 weist die erste Einrichtung 2 und eine alternativ ausgeführte zweite Einrichtung 31 auf, die sich von der zweiten Einrichtung 3 lediglich dadurch unterscheidet, dass es ein u-förmig ausgeführtes Trockenbauprofilelement 32 aufweist, mittels denen Trockenbauwände an der Kabelbox 30 anbindbar sind. Das Trockenbauprofilelement 32 verläuft entlang der Seitenplatten 16, 17 und der Grundplatte 15. Das Trockenbauprofilelement 32, das auch mehrteilig ausgeführt sein kann, kann somit vorteilhafterweise bereits herstellerseitig mit der zweiten Einrichtung 31 verbunden werden, so dass die Montage vereinfacht ist.

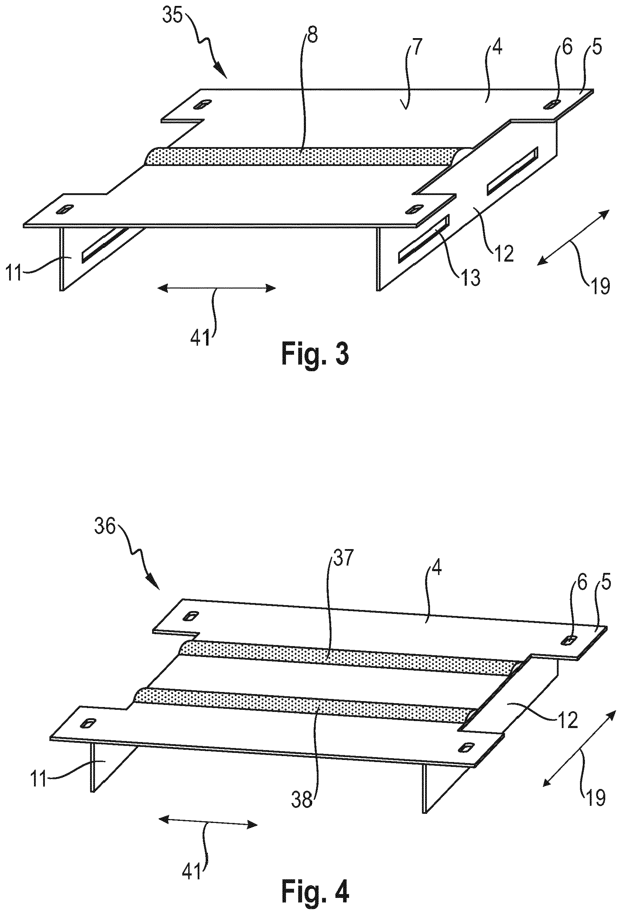

Fig. 3 zeigt eine alternativ ausgeführte erste Einrichtung 35, die sich von der ersten Einrichtung 2 lediglich dadurch unterscheidet, das keine Dichteinrichtungen vorgesehen sind.

Eine weitere alternativ ausgeführte erste Einrichtung 36 ist in Fig. 4 gezeigt. Die erste Einrichtung 36 unterscheidet sich von der ersten Einrichtung 2 lediglich dadurch, dass es zwei Dichtelement 37, 38 aufweist, wobei ein erstes Dichtelement 37 und ein zweites Dichtelement 38 im Wesentlichen vergleichbar zu dem Dichtelement 8 ausgeführt sind und lediglich in Querrichtung 19 zueinander versetzt angeordnet sind. Hierdurch ist eine verbesserte Abdichtung gegenüber der Decke oder Wand erzielbar. Die Dichtelemente 37, 38 erstrecken sich jeweils von dem ersten Seitenbereich 9 bis zu dem zweiten Seitenbereich 10 und sind hier im Wesentlichen parallel zueinander angeordnet.

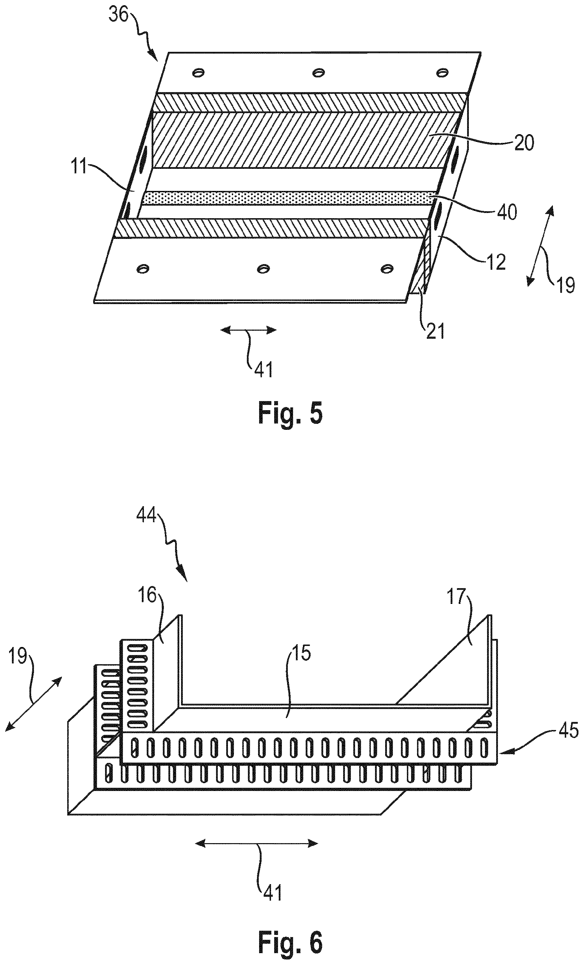

Fig. 5 zeigt die erste Einrichtung 36 aus einer anderen Perspektive, wobei eine in montiertem Zustand der Decke oder Wand abgewandte Seite 39 der Grundplatte 4 näher ersichtlich ist. An der Seite 39 der Grundplatte 4 ist dabei ein als Intumeszenzstreifen 40 ausgeführtes Intumeszenzelement angeordnet, welches sich vorliegend senkrecht zur Querrichtung 19, in Längsrichtung 41 von dem ersten Seitenelement 11 bis zu dem zweiten Seitenelement 12 erstreckt und in Querrichtung 19 im Wesentlichen mittig zwischen den Dichteinrichtungen 20, 21 angeordnet ist. Die Grundplatte 4 kann in einem Verbindungsbereich mit dem Intumeszenzstreifen 40 ein oder mehrere Löcher aufweisen, so dass in einem Brandfall durch den Intumeszentstreifen 40 eine Abdichtung zwischen der Grundplatte 4 und der Decke oder Wand durch das Dichtelement 8 oder die Dichtelemente 37, 38 unterstützt ist.

Fig. 6 zeigt eine weitere Ausführung einer zweiten Einrichtung 44, das im Wesentlichen der zweiten Einrichtung 31 ohne die Dichteinrichtungen 22 und 23 entspricht. Weiterhin unterscheidet sich die zweite Einrichtung 44 von der zweiten Einrichtung 31 durch die Ausführung des Trockenbauprofilelements 45, das in der Form dem Trockenbauprofilelement 32 entspricht allerdings mit einer Vielzahl von länglichen Öffnung ausgeführt ist und somit ein sogenanntes "slotted"-Trockenbauprofilelement 45 darstellt, das vorzugsweise im Bereich von Bewegungsfugen eingesetzt wird.

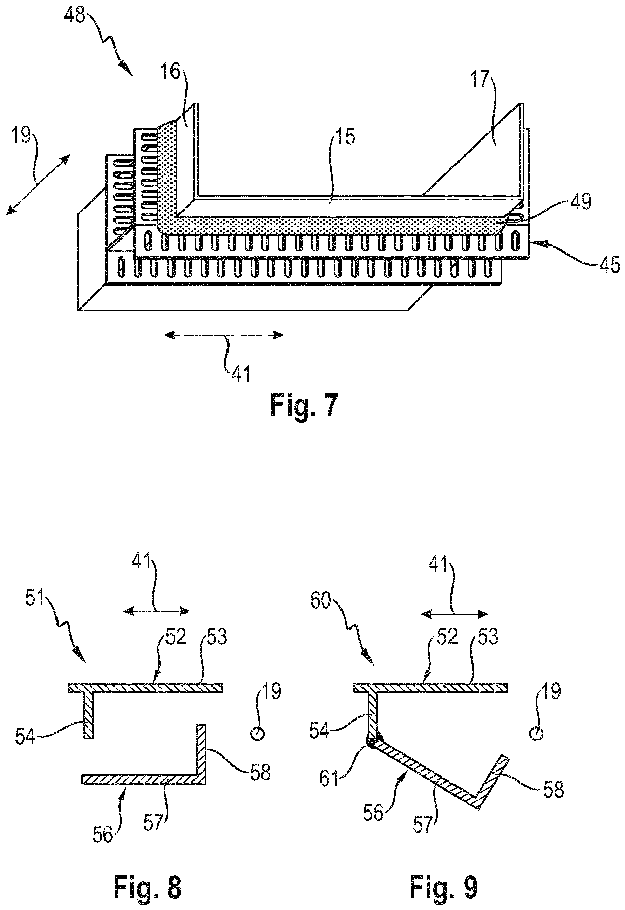

Die in Fig. 7 gezeigte zweite Einrichtung 48 entspricht der zweiten Einrichtung 44 mit dem Unterschied, dass eine weitere Dichteinrichtung 49 vorgesehen ist. Die Dichteinrichtung dient dazu, eine Fuge zwischen einer Trockenbauwand und der Kabelbox abzudichten, wobei sich die weitere Dichteinrichtung 49 vorliegend entlang eines gesamten Stoßbereiches des Trockenbauprofilelements 45 mit der Grundplatte 15 und den Seitenplatten 16, 17 erstreckt. Die in montiertem Zustand außenseitig des Trockenbauprofilelement 45 angeordnet und insbesondere direkt an einem Trockenbauelement anliegende weitere Dichteinrichtung 49 ist zur Aufnahme von Bewegungen und zur Verhinderung einer Weiterleitung von Feuer, Rauch und Temperatur an einer Außenseite der Kabelbox ausgeführt.

In Fig. 8 ist eine weitere Bauform einer alternativ ausgeführten Kabelbox 51 gezeigt, bei der sowohl eine erste Einrichtung 52 als auch eine zweite Einrichtung 56 L-förmig bzw. winkelförmig ausgeführt sind, in der Art, dass die erste Einrichtung 52 neben einer Grundplatte 53 ein Seitenelement 54 und die zweite Einrichtung 56 neben einer Grundplatte 57 ein weiteres Seitenelement 58 aufweist. Die erste Einrichtung 52 und die zweite Einrichtung 56 können ansonsten vergleichbar zu den oben näher beschriebenen ersten Einrichtungen und zweiten Einrichtung ausgeführt sein, wobei die zweite Einrichtung 56 ebenso in vergleichbarer Weise mit der ersten Einrichtung 52 in Wirkverbindung bringbar ist.

Eine weitere stark schematisierte Ausführung einer Kabelbox 60 ist in Fig. 9 gezeigt. Die Kabelbox 60 entspricht im Wesentlichen der Kabelbox 51, wobei die zweite Einrichtung 56 über ein Scharnier 61 mit der ersten Einrichtung 52 verbunden ist. Das Scharnier 61 ist dabei mit der Grundplatte 57 der zweiten Einrichtung 56 und dem Seitenelement 54 der ersten Einrichtung 52 verbunden. Zur Anbindung des weiteren Seitenelements 58 der zweiten Einrichtung 56 an die Grundplatte 53 der ersten Einrichtung 52 können beispielsweise Haken, Bolzen oder einer Schraubverbindung vorgesehen sein.

Grundsätzlich können verschiedene Ausführungen von ersten Einrichtungen mit verschiedenen Ausführungen von zweiten Einrichtungen kombiniert werden.

### Bezugszeichenliste

- 1: Kabelbox
- 2: erste Einrichtung
- 3: zweite Einrichtung
- 4: Grundplatte
- 5: Befestigungslasche
- 6: Bohrung
- 7: Seite
- 8: Dichtelement
- 9: erster Seitenbereich der ersten Einrichtung
- 10: zweiter Seitenbereich der ersten Einrichtung
- 11: erstes Seitenelement
- 12: zweites Seitenelement
- 13: Langloch
- 15: Grundplatte
- 16: erste Seitenplatte
- 17: zweite Seitenplatte
- 18: Kanal
- 19: Querrichtung
- 20: erste Dichteinrichtung
- 21: zweite Dichteinrichtung
- 22: dritte Dichteinrichtung
- 23: vierte Dichteinrichtung
- 30: Kabelbox
- 31: zweite Einrichtung
- 32: Trockenbauprofilelement
- 35: erste Einrichtung
- 36: erste Einrichtung
- 37: erstes Dichtelement
- 38: zweites Dichtelement
- 39: Seite
- 40: Intumeszenzelement
- 41: Längsrichtung
- 44: zweite Einrichtung
- 45: Trockenbauprofilelement
- 48: zweite Einrichtung
- 49: weitere Dichteinrichtung
- 51: Kabelbox
- 52: erste Einrichtung
- 53: Grundplatte
- 54: Seitenelement
- 56: zweite Einrichtung
- 57: Grundplatte
- 58: weiteres Seitenelement
- 60: Kabelbox
- 61: Scharnier

## Patentansprüche

1. Kabelbox (1; 30; 51; 60) zur Anordnung an einer Wand oder einer Decke und zur Verbindung mit einer Trockenbauwand, wobei in montiertem Zustand der Kabelbox (1; 30; 51; 60) Leitungen durch die Kabelbox (1; 30; 51; 60) und somit durch die Trockenbauwand führbar sind, umfassend eine erste Einrichtung (2; 35; 36; 52) mit wenigstens einem Befestigungselement (5) zur Anordnung der ersten Einrichtung (2; 35; 36; 52) an einer Wand oder einer Decke und eine zweite Einrichtung (3; 31; 44; 48; 56), wobei die erste Einrichtung (2; 35; 36; 52) und die zweite Einrichtung (3; 31; 44; 48; 56) in miteinander verbundener, montierter Position eine Durchführung von Leitungen in einer Längsrichtung durch die Kabelbox (1; 30; 51; 60) ermöglichen,
**dadurch gekennzeichnet,**
**dass** die erste Einrichtung (2; 35; 36; 52) wenigstens ein Dichtelement (8; 37, 38) zur Abdichtung gegenüber einer Wand oder einer Decke in an der Wand oder an der Decke montierter Position der Kabelbox (1; 30; 51; 60) aufweist.

2. Kabelbox nach Anspruch 1,
**dadurch gekennzeichnet,**
**dass** die zweite Einrichtung (3; 31; 44; 48; 56) wenigstens ein Trockenbauprofilelement (32; 45) zur Anbindung einer Trockenbauwand an die Kabelbox aufweist.

3. Kabelbox nach einem der Ansprüche 1 oder 2,
**dadurch gekennzeichnet,**
**dass** die erste Einrichtung (2; 35; 36; 52) und/oder die zweite Einrichtung (3; 31; 44; 48; 56) in montierter Position der Kabelbox (1; 30; 51; 60) an einer in montierter Position der Wand oder Decke abgewandten Außenfläche umlaufend Trockenbauprofilelemente (32; 45) zur Anbindung einer Trockenbauwand aufweist bzw. aufweisen.

4. Kabelbox nach einem der vorhergehenden Ansprüche,
**dadurch gekennzeichnet,**
**dass** das wenigstens eine Dichtelement (8; 37, 38) der ersten Einrichtung (2; 35; 36; 52) streifenförmig ausgeführt ist und sich wenigstens annähernd über eine gesamte Länge der ersten Einrichtung (2; 35; 36; 52) erstreckt.

5. Kabelbox nach einem der vorhergehenden Ansprüche,
**dadurch gekennzeichnet,**
**dass** die erste Einrichtung (2; 35; 36; 52) und die zweite Einrichtung (3; 31; 44; 48; 56) lösbar miteinander verbindbar sind.

6. Kabelbox nach einem der vorhergehenden Ansprüche,
**dadurch gekennzeichnet,**
**dass** die erste Einrichtung (2; 35; 36; 52) und die zweite Einrichtung (3; 31; 44; 48; 56) mittels eines Scharniers (61) miteinander verbunden sind.

7. Kabelbox nach einem der vorhergehenden Ansprüche,
**dadurch gekennzeichnet,**
**dass** die erste Einrichtung (2; 35; 36; 52) im Wesentlichen plattenförmig und die zweite Einrichtung (3; 31; 44; 48; 56) im Wesentlichen U-förmig ausgeführt sind.

8. Kabelbox nach einem der Ansprüche 1 bis 6,
**dadurch gekennzeichnet,**
**dass** die erste Einrichtung (2; 35; 36; 52) und die zweite Einrichtung (3; 31; 44; 48; 56) im Querschnitt im Wesentlichen L-förmig und/oder winkelförmig ausgeführt sind.

9. Kabelbox nach einem vorhergehenden Ansprüche,
**dadurch gekennzeichnet,**
**dass** die erste Einrichtung (2; 35; 36; 52) und die zweite Einrichtung (3; 31; 44; 48; 56) einstückig ausgeführt sind.

10. Kabelbox nach einem der vorhergehenden Ansprüche,
**dadurch gekennzeichnet,**
**dass** die erste Einrichtung (2; 35; 36; 52) und/oder die zweite Einrichtung (3; 31; 44; 48; 56) in wenigstens einem zur Durchführung von Leitungen vorgesehenen Bereich wenigstens eine Dichteinrichtung (20, 21, 22, 23) aufweist bzw. aufweisen.

11. Kabelbox nach Anspruch 10,
**dadurch gekennzeichnet,**
**dass** sowohl die erste Einrichtung (2; 35; 36; 52) als auch die zweite Einrichtung (3; 31; 44; 48; 56) jeweils wenigstens eine Dichteinrichtung (20, 21, 22, 23) aufweist, wobei die Dichteinrichtungen (20, 21, 22, 23) in montiertem Zustand der Kabelbox (1; 30; 51; 60) einen zur Leitungsdurchführung vorgesehenen Kanal (18) nach außen abdichten.

12. Kabelbox nach einem der Ansprüche 10 oder 11,
**dadurch gekennzeichnet,**
**dass** wenigstens eine Dichteinrichtung (20, 21, 22, 23) mit einem elastischen Schaumstoff ausgeführt ist und vorzugsweise mit einem intumeszierenden Material ausgeführt ist.

13. Kabelbox nach einem der vorhergehenden Ansprüche,
**dadurch gekennzeichnet,**
**dass** die erste Einrichtung (2; 35; 36; 52) und/oder die zweite Einrichtung (3; 31; 44; 48; 56) insbesondere im Bereich eines zur Leitungsdurchführung vorgesehenen Kanals (18) ein Intumeszenzelement (40), beispielsweise in Form eines Intumeszenzstreifens, aufweist bzw. aufweisen.

14. Kabelbox nach einem der vorhergehenden Ansprüche,
**dadurch gekennzeichnet,**
**dass** die erste Einrichtung (2; 35; 36; 52) und/oder die zweite Einrichtung (3; 31; 44; 48; 56) im Bereich des wenigstens einen Trockenbauprofilelementes (32; 45) eine weitere Dichteinrichtung (49) aufweist, die auf einer in montierter Position der Kabelbox (1; 30; 51; 60) mit einem Trockenbauelement zusammenwirkenden Seite des wenigstens einen Trockenbauprofilelements (32; 45) angeordnet ist.

15. Kabelbox nach einem der vorhergehenden Ansprüche,
**dadurch gekennzeichnet,**
**dass** die erste Einrichtung (2; 35; 36; 52) und/oder die zweite Einrichtung (3; 31; 44; 48; 56) mit einem Blech ausgeführt ist.
